# EUROPEAN PATENT APPLICATION

(11) **EP 4 470 406 A1**
(43) Date of publication of application: **04.12.2024**
(21) Application number: 24178528.6
(22) Date of filing: 28.05.2024
(51) Int. Cl.: A41H 3/00, G06F 30/00, G06T 19/00, G06T 19/20, G06F 113/12

(54) **GENERATING 2D GARMENT PIECES USING 3D CAD TOOLS**

(30) Priority: 01.06.2023 US 202318204800
(71) Applicant: Clothing Tech LLC, Austin, TX 78750 (US)
(72) Inventor: Wilcox, William, Austin, TX 78735 (US)
(74) Representative: Kaminski Harmann

(57) **Abstract**

A computer-implemented method for fabricating user-generated 2D garment pieces of a garment, the method comprising receiving garment piece data related to a plurality of 2D garment pieces, virtually 3D assembling the garment pieces to form a 3D garment, visualizing the 3D garment on an avatar, performing a garment adjustment process and generating fabrication instructions for fabricating the user-generated 2D garment pieces, wherein the garment adjustment process comprises providing 3D measurement tools and providing a plurality of 2D projection curves, receiving a user input including a manipulation of a 2D projection curve, adjusting, in response to the user input and according to the manipulation, a 2D shape of the corresponding garment piece, visualizing, in real time, a manipulated 3D garment on the avatar, the shape pieces of the manipulated 3D garment having the adjusted 2D shapes, and storing user-generated garment 2D garment pieces.

## Description

### FIELD OF THE INVENTION

The present invention relates to a computer-implemented method for generating 2D garment pieces by a user and generating fabrication instructions for fabricating the user-generated 2D garment pieces. The 2D garment pieces are generated in a garment adjustment process in which these are visualized in an assembled state as a virtual 3D garment. A designer may perform measurements and modifications at the virtual 3D garment, which are automatically interpreted as measurements and modifications of the respective 2D garment pieces.

### BACKGROUND OF THE INVENTION

Garment design is a laborious process. The process as traditionally carried out has distinct stages and requires people with different skill sets. The garment design process typically starts with a garment designer who draws in 2D the proposed garment from different perspectives. The 2D drawings created by the garment designer are taken by a pattern maker who creates 2D patterns that can be sewn together. Once sewn together, the sewn 2D patterns should produce the proposed garment. A sample maker produces a physical garment using the 2D patterns, wherein the produced physical garment may be draped onto a human or a dress form, for example. The garment designer may inspect the draped garment and request additional modifications if the draped garment deviates from the ideal garment as envisioned by the garment designer. Modifications if needed are made to the 2D patterns to improve the potential product. As the changes are made to 2D patterns, it is potentially difficult to determine how the changes will impact the resulting draped garment.

### OBJECT OF THE INVENTION

It is therefore an object of the present invention to provide a computer implemented method that allows a simpler and faster garment design process.

It is a further object of the present invention to provide a computer implemented method allowing the laborious work of the pattern maker and the sample maker to be eliminated.

These objects are achieved by realizing at least part of the features of the independent claims. Features which further develop the invention in an alternative or advantageous manner are described in the dependent patent claims.

### SUMMARY OF THE INVENTION

The invention pertains to a method for fabricating user-generated garment pieces of a garment. The method is a computer-implemented method that is performed at least in part in a computer system.

The method comprises receiving garment data related to a predefined or default garment, the garment data comprising garment piece data related to a plurality of two-dimensional (2D) garment pieces, from which the predefined or default garment may be assembled, the plurality of 2D garment pieces comprising shape pieces that are flat fabric pieces, which together provide an overall shape of the garment when assembled. At least these shape pieces are virtually assembled in three dimensions (3D assembled) to form a three-dimensional (3D) garment that has a plurality of openings for accommodating body parts, such as a neck opening or a waist opening.

This 3D garment is then visualized on an avatar in a graphical user interface (GUI), the avatar comprising a plurality of body regions, the 3D garment at least partially covering at least a subset of the body regions of the avatar, wherein the body regions include at least a torso and one or more of arms and legs. A garment adjustment process is then performed, which allows a user to generate user-generated 2D garment pieces based on the visualized 3D garment. Fabrication instructions are then generated that allow fabricating the user-generated 2D garment pieces.

The garment adjustment process comprises providing 3D measurement tools to the user in the GUI, the measurement tools allowing the user to obtain dimensions of the 3D garment that is visualized on the avatar, wherein, in response to a user request at one of the 3D measurement tools, one or more of the dimensions of the garment are provided. The garment adjustment process also comprises providing a plurality of 2D projection curves in the GUI at the 3D garment, each 2D projection curve being manipulatable by a user input. If a user input is received at one of the 2D projection curves, which input includes a manipulation of the respective 2D projection curve, a 2D shape of at least one corresponding shape piece is adjusted in response to the user input and according to the manipulation. A manipulated 3D garment is visualized in real time on the avatar, wherein the shape pieces of the manipulated 3D garment have the adjusted 2D shapes. Finally, in response to a user confirmation, the shape pieces of the manipulated 3D garment are stored as the 2D garment pieces of the user-generated garment.

According to some embodiments, the garment comprises one or more finishes and the plurality of 2D garment pieces comprises finish pieces that are not shape pieces, the finish pieces comprising at least a subset of cuffs, plackets, flies, pockets, waistbands and collars.

According to some embodiments, each body region defines a main axis, and the dimensions comprise, for each of the body regions, at least one width or circumference and at least one length. The at least one width or circumference is perpendicular to the main axis of the respective body region, and the at least one length is parallel to the main axis of the respective body region.

According to some embodiments, the plurality of 2D projection curves relate to a width of the 3D garment or of one or more of the shape pieces, to a circumference profile of the 3D garment or of one or more of the shape pieces, to a length of the 3D garment or of one or more of the shape pieces, and/or to a shape of at least a subset of the plurality of openings of the 3D garment.

According to some embodiments, the garment adjustment process is an iterative garment adjustment process. For instance, at least the steps of receiving the user input, adjusting the 2D shape and visualizing the manipulated 3D garment are performed iteratively until the user confirmation is received via the graphical user interface.

According to some embodiments, the garment data comprises a garment type identifier identifying a garment type of the predefined or default garment, and virtually 3D assembling the shape pieces is based also on the garment type. For instance, the garment type defines areas of the human body the garment is intended to cover and a plurality of openings necessary to accommodate body parts, or relative positions of a set of shape pieces and a plurality of openings resulting from these relative positions. The body parts include at least one of arms, legs and neck. Optionally, a list comprising a plurality of garment type identifiers for a plurality of different garment types may be provided to the user, and the garment type identifier may be selected from the list by the user.

According to some embodiments, the garment is made from a flexible material, the visualized 3D garment being visualized as flexible, wherein the avatar defines a stable shape of the visualized 3D garment. In some embodiments, a size and/or shape of the avatar is automatically selected based on the garment data, in other embodiments, in response to a manipulation of the respective 2D projection curve, the manipulation may be visualized in real time as a manipulation of the flexible material.

According to some embodiments, the method further comprises assigning one or more garment features to each of the 2D shape pieces, the garment features comprising a least a fabric, wherein the assembled shape pieces are visualized on the avatar in the graphical user interface as the preliminary 3D garment having the assigned garment features.

According to some embodiments, the fabrication instructions comprise cut boundaries of the user-generated 2D garment pieces.

According to some embodiments, at least one of the shape pieces is a sleeve piece relating to a sleeve of the garment, and adjusting the 2D shape of the sleeve piece comprises changing a length of the sleeve and changing a circumference of an arm hole of the sleeve.

According to some embodiments, receiving the garment data comprises loading a file into a memory of the computer system. For instance, the file, which, e.g., may be 2D CAD file or a DXF file, is loaded into the memory upon receiving a respective user input.

According to some embodiments, generating the fabrication instructions for fabricating the 2D garment pieces comprises generating fabrication instructions for fabricating the user-generated garment, i.e. from the user-generated 2D garment pieces.

According to some embodiments, the fabrication instructions are computer-readable instructions and the method further comprises providing the fabrication instructions to one or more garment fabrication machines and fabricating, by the one or more garment fabrication machines, the user-generated 2D garment pieces based on the fabrication instructions. According to other embodiments, the fabrication instructions are human-readable instructions and the method further comprises providing the fabrication instructions to one or more garment producers and fabricating, by the one or more garment producers, the user-generated 2D garment pieces based on the fabrication instructions.

The invention also relates to a computer program product comprising executable code, which executable code, when executed by a computer processor, causes the computer processor to implement such a method of fabricating user-generated 2D garment pieces of a garment.

### FURTHER ASPECTS OF THE DISCLOSURE

The claimed invention may be combined with further aspects disclosed in this document. In particular, method steps may be modified or added based on one or more aspects disclosed below.

One of these aspects relates to a first computer implemented method, with program code being stored on a machine readable medium or embodied as an electromagnetic wave, for generating at least one 2D pattern of a garment to be fabricated. The first computer implemented method comprises the following steps: 1) visualizing a relaxed 3D CAD model of a first garment in a virtual 3D environment with a graphical user interface configured to receive user input, wherein the relaxed 3D CAD model is placed on an avatar placed into the virtual 3D environment based on avatar user input provided via the graphical user interface 2) altering the relaxed 3D CAD model by changing at least one parameter parametrizing the relaxed 3D CAD model based on user input provided via the graphical user interface, the alteration providing an altered 3D CAD model 3) generating the at least one 2D pattern so as to conform to at least a part of the altered 3D CAD model 4) providing a modified 3D CAD model by reassembling the generated at least one 2D pattern on the avatar 5) determining an updated relaxed 3D CAD model using the modified 3D CAD model, wherein the updated relaxed 3D CAD model is placed on the avatar, the updated relaxed 3D CAD model representing the garment to be fabricated, and 6) visualizing the updated relaxed 3D CAD model of the garment to be fabricated in the virtual 3D environment.

A 3D CAD model of a first garment is visualized in a relaxed state on an avatar in a virtual 3D environment, wherein the term relaxed refers to a physical state in which the 3D CAD model is in static physical equilibrium. A garment designer using a computer program, said computer program being configured to provide the first computer implemented method, alters the relaxed 3D CAD model of the first garment via the graphical user interface provided by the computer program. Alteration can proceed e.g. by clicking - via the graphical user interface - on a part of the relaxed 3D CAD model of the first garment and by changing the shape of the part through a drag operation. Clicking can for example be carried out using a computer mouse connected to a computing unit executing the computer program, or using a touch screen, or using a touch pen. The click-and-drag operation changes at least one parameter parametrizing the relaxed 3D CAD model of the first garment. Besides click-and-drag, alteration can proceed by clicking on a part of the relaxed 3D CAD model of the first garment, and then by actively changing at least one parameter parametrizing the part of the relaxed 3D CAD model. The alteration provides an altered 3D CAD model.

The computer program providing the first computer implemented method generates at least one 2D pattern conforming to the altered 3D CAD model. The at least one 2D pattern is generated in such a way as to correspond to the altered 3D CAD model once sewn together. The generated at least one 2D pattern is reassembled on the avatar by the computer program. Reassembling takes into account seam information, for example, wherein distinct 2D patterns sharing a seam are reassembled in a neighborly manner, for example. The reassembling may simulate the fabrication process of fabricating a garment given 2D patterns. The reassembling provides a modified 3D CAD model. At least one 2D pattern is generated, wherein the at least one generated 2D pattern corresponds to at least a part of the altered 3D CAD model. For example, only 2D patterns corresponding to the sleeves of the altered 3D CAD model may be generated.

Since the alteration of the relaxed 3D CAD model of the first garment may change the overall shape and mechanical behavior of the first garment and since the modified 3D CAD model is reassembled from the generated at least one 2D pattern which conforms to the altered 3D CAD model, the modified 3D CAD model is typically not in a state of physical equilibrium. If, for example, sleeves of the first garment were lengthened, the lengthened sleeves would exert a greater force on the torso of the first garment via a connecting seam on account of the larger mass of the lengthened sleeve. Starting with the modified 3D CAD model, an updated relaxed 3D CAD model is determined, wherein the updated relaxed 3D CAD model is in static equilibrium, i.e. the unbalanced forces on account of the alteration made to the relaxed 3D CAD model of the first garment are physically propagated through the entire 3D CAD model to reach a rest state, providing the updated relaxed 3D CAD model.

The garment designer may now inspect the updated relaxed 3D CAD model, wherein the updated relaxed 3D CAD model is graphically displayed via the graphical user interface. In case the garment designer is satisfied with the updated relaxed 3D CAD model, the garment designer may stop the design process.

In an embodiment of the first computer implemented method, the at least one parameter to be changed relates to sleeve length, sleeve radius, chest circumference, waist measurement, torso length or neck opening of the first garment. It is understood that the at least one parameter to be changed may also relate to other geometric properties of the relaxed 3D CAD model. The above list mainly possesses exemplary character.

A second aspect relates to a computer implemented method, with program code being stored on a machine readable medium or embodied as an electromagnetic wave, for generating at least one 2D pattern of a garment to be fabricated. The second computer implemented method comprises the following steps: 1) visualizing a relaxed 3D CAD model of a first garment in a virtual 3D environment with a graphical user interface configured to receive user input, wherein the relaxed 3D CAD model is placed on an avatar placed into the virtual 3D environment based on avatar user input provided via the graphical user interface 2) defining a position and orientation of a 2D plane in the virtual 3D environment relative to the relaxed 3D CAD model based on user input provided via the graphical user interface 3) projecting the relaxed 3D CAD model onto the 2D plane, thereby obtaining a projected garment model 4) altering the projected garment model by changing at least one seam and/or at least one edge of the first garment in the projected garment model and/or by adding at least one seam and/or at least one edge of the first garment in the projected garment model and/or by removing at least one seam in the projected garment model, wherein the alteration is based on user input provided via the graphical user interface, the alteration providing a geometrically altered projected garment model 5) back projecting the geometrically altered projected garment model onto the relaxed 3D CAD model, the back projection providing an altered 3D CAD model 6) generating the at least one 2D pattern based on the altered 3D CAD model, wherein the generated at least one 2D pattern conforms to at least a part of the altered 3D CAD model 7) providing a modified 3D CAD model by reassembling the generated at least one 2D pattern on the avatar 8) determining an updated relaxed 3D CAD model using the modified 3D CAD model, wherein the updated relaxed 3D CAD model is placed on the avatar, the updated relaxed 3D CAD model representing the garment to be fabricated, and 9) visualizing the updated relaxed 3D CAD model of the garment to be fabricated in the virtual 3D environment.

A 3D CAD model of a first garment is visualized in a relaxed state on an avatar in a virtual 3D environment, wherein the term relaxed refers to a physical state in which the 3D CAD model is in static physical equilibrium. A garment designer using a computer program, said computer program being configured to provide the second computer implemented method, alters the first garment via the graphical user interface provided by the computer program. The garment designer (user) defines the position and orientation of a 2D plane in the virtual 3D environment relative to the relaxed 3D CAD model. The computer program projects the relaxed 3D CAD model onto the 2D plane defined by the user, thereby obtaining a projected garment model. By changing the placement of the 2D plane, the garment designer is able to view the relaxed 3D CAD model from different points of view. The 2D plane may be visualized in the virtual 3D environment in which the relaxed 3D CAD model is displayed. The projected garment model may be visually displayed to the garment designer who then alters the projected garment model.

The projected garment model is altered by changing at least one seam and/or at least one edge of the first garment in the projected garment model and/or by adding at least one seam and/or at least one edge of the first garment in the projected garment model and/or by removing at least one seam in the projected garment model. Alteration can proceed e.g. by clicking - via the graphical user interface - on a seam visible in the projected garment model and by changing the shape of the seam through a drag operation. Clicking can for example be carried out using a computer mouse connected to a computing unit executing the computer program, or using a touch screen or a touch pen. The garment designer may also draw a new seam onto the projected garment model using the graphical user interface. An existing seam may also be removed based on user instruction provided via the graphical user interface. The alteration provides a geometrically altered projected garment model.

The computer program projects the geometrically altered projected garment model back onto the relaxed 3D CAD model. The projecting back may be automatically carried out once e.g. a seam alteration has been carried out, or the projecting back may alternatively be carried out based on a command provided to the computer program via the graphical user interface. As a result of the back projecting, an altered 3D CAD model is obtained.

The computer program providing the second computer implemented method generates at least one 2D pattern conforming to the altered 3D CAD model. The at least one 2D pattern is generated in such a way as to correspond to the altered 3D CAD model once sewn together. The generated at least one 2D pattern is reassembled on the avatar by the computer program. Reassembling takes into account seam information, for example, wherein distinct 2D patterns sharing a seam are reassembled in a neighborly manner, for example. The reassembling may simulate the fabrication process of fabricating a garment given 2D patterns. The reassembling provides a modified 3D CAD model. At least one 2D pattern is generated, wherein the at least one generated 2D pattern corresponds to at least a part of the altered 3D CAD model. For example, only 2D patterns corresponding to the sleeves of the altered 3D CAD model may be generated.

The alteration of the relaxed 3D CAD model of the first garment may change the overall shape and mechanical behavior of the first garment. The changed position of a seam between a sleeve and a torso of a t-shirt, for example, may change the forces acting between sleeve and torso. Starting with the modified 3D CAD model, an updated relaxed 3D CAD model is determined, wherein the updated 3D CAD model is in static equilibrium, i.e. the alterations made to the relaxed 3D CAD model of the first garment are physically propagated through the entire 3D CAD model to reach a rest state, the rest state corresponding to the updated relaxed 3D CAD model.

The garment designer may now inspect the updated relaxed 3D CAD model, wherein the updated relaxed 3D CAD model is graphically displayed via the graphical user interface. In case the garment designer is satisfied with the updated relaxed 3D CAD model, the garment designer may stop the design process.

In an embodiment of the second computer implemented method, the changed at least one seam and/or the added at least one seam and/or the removed at least one seam is embodied as a plain seam, French seam, flat or abutted seam, or lapped seam. It is understood that the mentioned seam embodiments are purely exemplary and do not preclude other seam types.

In another embodiment of the second computer implemented method, the changed at least one edge of the first garment and/or added at least one edge of the first garment is embodied as a hem or as a finish.

In a further embodiment of the second computer implemented method, a position of the changed at least one seam and/or at least one edge of the first garment and/or a position of the added at least one seam and/or at least one edge of the first garment is described by a Bezier curve or by a polyline, wherein at least one control point of the Bezier curve is based on control point user input provided via the graphical user interface. It is understood that the Bezier curve and the polyline are purely exemplary and do not preclude other line descriptions.

A Bezier curve may be easily modified via a graphical user interface by changing the position of control points determining the shape of the Bezier curve. A user of the computer program providing the second computer implemented method may therefore easily change and/or add a seam and/or a garment edge by adding and/or removing control points of Bezier curves, for example.

A third aspect relates to a computer implemented method, with program code being stored on a machine readable medium or embodied as an electromagnetic wave, for generating at least one 2D pattern of a garment to be fabricated. The third computer implemented method comprises the following steps: 1) visualizing a relaxed 3D CAD model of a first garment in a virtual 3D environment with a graphical user interface configured to receive user input, wherein the relaxed 3D CAD model is placed on an avatar placed into the virtual 3D environment based on avatar user input provided via the graphical user interface 2) defining a position and orientation of a 2D plane in the virtual 3D environment relative to the relaxed 3D CAD model based on user input provided via the graphical user interface 3) projecting the relaxed 3D CAD model onto the 2D plane, thereby obtaining a projected garment model 4) altering the projected garment model by adding at least one print and/or at least one embellishment onto at least a part of the projected garment model, wherein the adding of the at least one print and/or at least one embellishment is based on user input, the alteration providing an additively altered projected garment model 5) back projecting the additively altered projected garment model onto the relaxed 3D CAD model, the back projection providing an altered 3D CAD model 6) generating the at least one 2D pattern based on the altered 3D CAD model, wherein the generated at least one 2D pattern conforms to at least a part of the altered 3D CAD model 7) providing a modified 3D CAD model by reassembling the generated at least one 2D pattern on the avatar 8) determining an updated relaxed 3D CAD model using the modified 3D CAD model, wherein the updated relaxed 3D CAD model is placed on the avatar, the updated relaxed 3D CAD model representing the garment to be fabricated, and 9) visualizing the updated relaxed 3D CAD model of the garment to be fabricated in the virtual 3D environment.

A 3D CAD model of a first garment is visualized in a relaxed state on an avatar in a virtual 3D environment, wherein the term relaxed refers to a physical state in which the 3D CAD model is in static physical equilibrium. A garment designer using a computer program, said computer program being configured to provide the third computer implemented method, alters the first garment via the graphical user interface provided by the computer program. The garment designer (user) defines the position and orientation of a 2D plane in the virtual 3D environment relative to the relaxed 3D CAD model. The computer program projects the relaxed 3D CAD model onto the 2D plane defined by the user, thereby obtaining a projected garment model. By changing the placement of the 2D plane, the garment designer is able to view the relaxed 3D CAD model from different points of view. The 2D plane may be visualized in the virtual 3D environment in which the relaxed 3D CAD model is displayed. The projected garment model may be visually displayed to the garment designer who then alters the projected garment model.

The projected garment model may be altered by adding at least one print and/or at least one embellishment onto at least a part of the projected garment model. A print may for example be added to sleeves of a t-shirt, for example. Alteration can proceed e.g. by selecting through clicking - via the graphical user interface - the part of the projected garment model and by adding the desired pattern and/or embroidery to the selected part. Clicking can for example be carried out using a computer mouse connected to a computing unit executing the computer program, or using a touch screen or a touch pen. The garment designer may also draw a print and/or embroidery onto the projected garment model using the graphical user interface. The alteration provides an additively altered projected garment model.

The computer program projects the additively altered projected garment model back onto the relaxed 3D CAD model. The projecting back may be automatically carried out once a print and/or embellishment alteration has been carried out, or the projecting back may alternatively be carried out based on a command provided to the computer program via the graphical user interface. As a result of the back projecting, an altered 3D CAD model is obtained.

The computer program providing the third computer implemented method generates at least one 2D pattern conforming to the altered 3D CAD model. The at least one 2D pattern is generated in such a way as to correspond to the altered 3D CAD model once sewn together. The generated at least one 2D pattern is reassembled on the avatar by the computer program. Reassembling takes into account seam information, for example, wherein distinct 2D patterns sharing a seam are reassembled in a neighborly manner, for example. The reassembling may simulate the fabrication process of fabricating a garment given 2D patterns. The reassembling provides a modified 3D CAD model. At least one 2D pattern is generated, wherein the at least one generated 2D pattern corresponds to at least a part of the altered 3D CAD model. For example, only 2D patterns corresponding to the sleeves of the altered 3D CAD model may be generated.

The alteration of the relaxed 3D CAD model of the first garment may change the overall shape and mechanical behavior of the first garment. An added print and/or embroidery may change the mechanical behavior of a fabric, for example by making the fabric stiffer. Changed mechanical properties of fabrics may influence the overall shape of the proposed garment. Starting with the modified 3D CAD model, an updated relaxed 3D CAD model is determined, wherein the updated relaxed 3D CAD model is in static equilibrium, i.e. the alterations made to the relaxed 3D CAD model of the first garment are physically propagated through the entire 3D CAD model to reach a rest state, the rest state corresponding to the updated relaxed 3D CAD model.

The garment designer may now inspect the updated relaxed 3D CAD model, wherein the updated relaxed 3D CAD model is graphically displayed via the graphical user interface. In case the garment designer is satisfied with the updated 3D CAD model, the garment designer may stop the design process.

In an embodiment of one of the first, second or third computer implemented method, the following steps are carried out: 1) selecting the at least a part of the altered 3D CAD model based on selection user input provided via the graphical user interface, the selection user input comprising selection information relating to the altered 3D CAD model 2) the generating of the at least one 2D pattern provides only those 2D patterns relating to the at least a part of the altered 3D CAD model determined based on the selection user input.

The part of the altered 3D CAD model for which 2D patterns are determined may be determined through user input, for example by delineating the part by drawing lines around the desired part of the altered 3D CAD model using the graphical user interface.

In a further embodiment of one of the first, second or third computer implemented method, the determination of the updated relaxed 3D CAD model is at least based on 1) the modified 3D CAD model 2) the avatar 3) fabric information about at least one mechanical property of at least one fabric of the first garment, and 4) gravity, wherein the direction in which gravity acts is provided to the 3D virtual environment via gravity user input provided via the graphical user interface.

A set of equations describing the mechanics of garments is solved, wherein the modified 3D CAD model is an initial state for the set of equations, the solving providing a mechanical evolution and a rest state 3D CAD model at the end of the mechanical evolution, the rest state 3D CAD model characterized in that all physical forces acting on the rest state 3D CAD model are in static equilibrium, the rest state 3D CAD model being the updated relaxed 3D CAD model. The set of equations takes into account at least the fabric information, gravity and geometrical constraints imposed by the avatar on the mechanically evolving modified 3D CAD model and contact forces between the mechanically evolving modified 3D CAD model and the avatar.

The alteration of the relaxed 3D CAD model of the first garment may change the structure and size of the forces acting on the 3D CAD model. The modified 3D CAD model may for example be provided to a simulation engine specialized for simulating garments. Computer program(s) providing the first, second or third computer implemented method may call the simulation engine, or the simulation engine may be a part of the computer program(s). Starting with at least the modified 3D CAD model and information about the mechanical behavior of fabrics used for the garment and/or seam types/positions and information about the avatar and gravity, the simulation engine may simulate the mechanical evolution of the modified 3D CAD model until a rest state is found in which all forces acting on the (then found) updated relaxed 3D CAD model are in static equilibrium.

In a further embodiment of one of the first, second or third computer implemented method, the set of equations is provided by a finite element method acting on the modified 3D CAD model, the finite element method taking into account at least the fabric information, gravity and the avatar.

In a further embodiment of one of the first, second or third computer implemented method, the avatar is embodied as a mannequin.

The garment designer may desire to view a proposed garment directly on an avatar which is similar to an eventual buyer of the fabricated proposed garment. A human-shape avatar (mannequin) may be displayed in the virtual 3D environment, wherein the shape and size of the human-shape avatar may be chosen by the garment designer via the graphical user interface. The relaxed 3D CAD model and the updated relaxed 3D CAD model are placed on the avatar, wherein placement may for example occur by draping the virtual garment around the avatar.

In an embodiment of one of the second or third computer implemented method, the projecting of the relaxed 3D CAD model onto the 2D plane is carried out using a parallel projection, wherein the direction to which the projection is parallel is determined based on projection direction user input provided via the graphical user interface, or the projecting is carried out using a central projection, wherein a center of projection is determined based on projection center user input provided via the graphical user interface, wherein for parallel projection each point of the 2D plane is associated to a parallel projection line and for central projection each point of the 2D plane is associated to a central projection line.

Projecting may be embodied as parallel projection or central projection. In the former case, the projection direction may need to be provided by the garment designer, while in the latter case, the garment designer may additionally specify a center of projection in the virtual 3D environment via the graphical user interface. The computer program(s) providing the second computer implemented method or the third computer implemented method may also propose a 2D plane to the garment designer in case the garment designer clicks on a part of the relaxed 3D CAD model, for example. The proposed 2D plane may be automatically determined in such a way as to provide an optimal viewing of the part of the relaxed 3D CAD model on which the garment designer clicked. The computer program(s) may also allow for zooming in the 2D plane, wherein based on user input parts of the projected garment model are enlarged, while other parts of the projected garment model are not shown any more.

In a further embodiment of one of the second or third computer implemented method, the projecting comprises using for a point of the 2D plane the associated parallel projection line and/or the associated central projection line, and mapping a first point of the relaxed 3D CAD model intersecting the associated parallel projection line and/or the associated central projection line onto the point of the 2D plane, wherein the first point is determined looking along the associated parallel projection line and/or central projection line towards the 2D plane.

In a further embodiment of one of the second or third computer implemented method, the back projecting is an inverse operation to the projecting, the back projecting comprising using for a point of the 2D plane the associated parallel projection line and/or the associated central projection line, and mapping the point onto a last point of the relaxed 3D CAD model intersecting the associated parallel projection line and/or the associated central projection line, wherein the last point is determined looking along the associated parallel projection line and/or central projection line away from the 2D plane.

In an embodiment of the third computer implemented method, the at least one embellishment comprises distressing at least one fabric and/or adding embroidery. It is understood that distressing and adding embroidery are only illustrative examples and do not preclude other types of embellishments. The garment designer may for example also doodle a drawing on the projected garment model.

In a further embodiment of the third computer implemented method, the added at least one print and/or at least one embellishment is taken into account by the set of equations, wherein the additive alterations change the mechanical behavior of at least the part of the altered 3D CAD model corresponding to the additively altered at least a part of the projected garment model.

In a further embodiment of one of the first, second or third computer implemented method, the reassembling comprises resewing functionality.

In a further embodiment of one of the first, second or third computer implemented method, the altering of the first garment and the generating of the at least one 2D pattern is carried out simultaneously.

The 2D patterns may be generated in parallel to the alterations done to the relaxed 3D CAD model of the first garment. Once a parameter of the relaxed 3D CAD model is changed, for example, 2D patterns may be generated in parallel which correspond to the altered 3D CAD model.

A fourth aspect relates to a computer implemented method, with program code being stored on a machine readable medium or embodied as an electromagnetic wave, for generating 2D pattern pieces representing garment panels that a garment is to be fabricated from, the computer implemented method comprising visualizing a 3D garment model representing the garment on an avatar in a virtual 3D environment with a graphical user interface (GUI) configured to receive user input, providing an altered 3D garment model by adjusting, based on user input provided via the GUI, at least one GUI element that is linked to a parameter representing a distance, area or space between the 3D garment model and the avatar at a defined location 3D garment model, generating the 2D pattern pieces so as to conform to the altered 3D garment model, providing a reassembled 3D garment model by reassembling the generated 2D pattern pieces on the avatar, and visualizing the reassembled 3D garment model on the avatar in the virtual 3D environment.

In some embodiments, the GUI element is at least in part linked to the defined location.

In some embodiments, the defined location is a circumference of the 3D garment model at a defined height.

In some embodiments, a center of the circumference is located on a vertical axis of the 3D garment model.

In some embodiments, by the adjustment of the GUI element, said parameter is altered.

In some embodiments, said parameter is determined with a relaxed 3D garment model spatially not restricted by the avatar.

In some embodiments, the at least one GUI element comprises a shapeable line, said shapeable line proceeding adjacent to a neutral line parallel to a vertical axis of the 3D garment model and at least part of the shapeable line being shapeable horizontally.

In some embodiments, the at least one GUI element comprises anchor points, said anchor points distributed adjacent to a neutral line parallel to a vertical axis of the 3D garment model and the anchor points being slidable horizontally.

In some embodiments, the anchor points are located on and along said shapeable line, wherein the anchor points are slidable and the shapeable line follows the anchor points with smooth transitions.

In some embodiments, the shapeable line is a spline and the anchor points are knots of the spline.

In some embodiments, the at least one GUI element comprises a slidable line, said slidable line proceeding parallel to a horizontal axis of the 3D garment model and the slidable line as a whole being slidable vertically.

In some embodiments, by adjusting the slidable line, the parameter linked to the slidable line is associated to the location of the 3D garment model where the adjusted slidable line is located.

In some embodiments, by adjusting the slidable line, a length of the 3D garment model is adjusted accordingly.

In some embodiments, the at least one parameter to be changed is associated with a sleeve radius, a chest circumference, a waist measurement, or a torso length of the 3D garment model.

In some embodiments, the avatar is embodied as a mannequin.

In some embodiments, reassembling is based on a resewing functionality.

In some embodiments, altering the garment and generating the at least one 2D pattern is carried out simultaneously.

In some embodiments, the GUI comprises a presets window in the GUI, said presets window configured for providing a set of selectable fit profiles, each fit profile comprising a plurality of parameters.

In some embodiments, the GUI comprises a presets window in the GUI, said presets window configured for providing a set of selectable length profiles, each length profile comprising a plurality of parameters.

In some embodiments, the presets window comprises an intensity fader configured to determine to what degree a selected profile is applied.

### BRIEF DESCRIPTION OF THE DRAWINGS

The inventive system is described below in more detail purely by way of example with the aid of concrete exemplary embodiments illustrated schematically in the drawings, further advantages of the invention also being examined. Identical elements are labelled with the same reference numerals in the figures. In detail:
Figure 1 shows a schematic and illustrative depiction of a t-shirt with short sleeves and corresponding 2D patterns;
Figure 2 shows a schematic and illustrative depiction of a t-shirt with longer sleeves and corresponding 2D patterns;
Figure 3 shows a schematic and illustrative depiction of a t-shirt with short sleeves and a projection of the t-shirt onto a 2D projection plane;
Figure 4 shows a schematic and illustrative depiction of a human avatar dressed with a t-shirt;
Figure 5 shows a schematic and illustrative depiction of a t-shirt with short sleeves with added patterns;
Figure 6 shows a schematic and illustrative depiction of a computing unit and a display providing a graphical user interface;
Figure 7 shows a schematic and illustrative depiction of the prior art garment design process;
Figure 8 shows a schematic and illustrative depiction of a selective generation of 2D patterns;
Figures 9 to 12 show embodiments of a virtual 3D environment with a graphical user interface;
Figure 13 shows an embodiment of a graphical user interface;
Figure 14 shows an example of dimensions that can be measured with 3D measurement tools provided in the graphical user interface;
Figure 15 is a flow chart illustrating an exemplary embodiment of a computer-implemented method according to the invention;
Figure 16 is a flow chart illustrating an exemplary garment adjustment process as a part of the method of Figure 15; and
Figure 17 shows an exemplary embodiment of a computer system configured to perform the method of Figure 15.

### DETAILED DESCRIPTION OF THE DRAWINGS

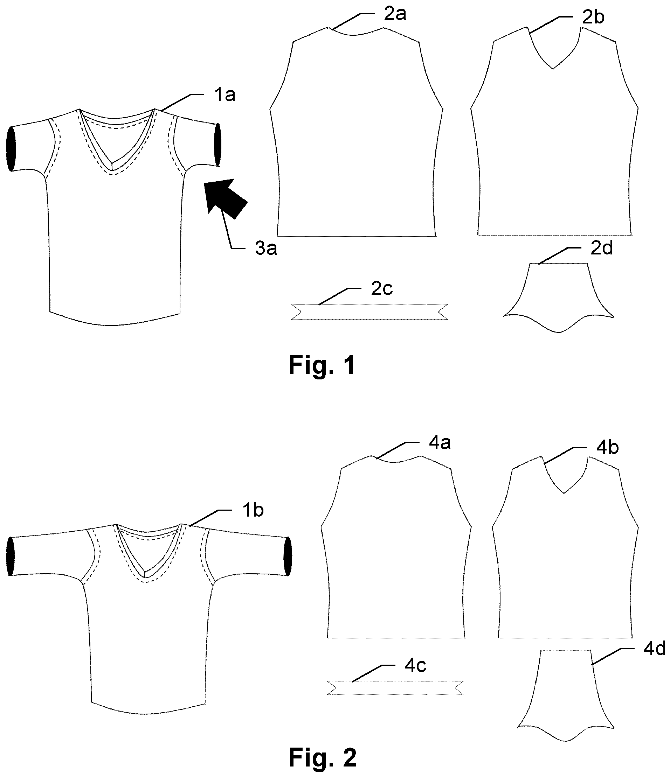

**Figure 1** shows a schematic and illustrative depiction of a t-shirt 1a with short sleeves and corresponding 2D patterns 2a,2b,2c,2d. The t-shirt 1a with short sleeves and the corresponding 2D patterns 2a,2b,2c,2d are displayed in a virtual 3D environment provided by e.g. a computing unit and an associated display. The t-shirt 1a with short sleeves is in a rest state, i.e. all physical forces acting on the t-shirt 1a with short sleeves are in static equilibrium. An exemplary physical force acting on the t-shirt 1a with short sleeves is gravity, wherein the direction in which gravity acts in the virtual 3D environment may be provided by a user to a computer program stored on the computing unit and providing the virtual 3D environment. The user of the computer program is able to interact with the t-shirt 1a with short sleeves via the graphical user interface. The user may decide to lengthen a sleeve of the t-shirt 1a with short sleeves. Via the graphical user interface, the user may provide an instruction 3a to the computer program to lengthen the sleeve.

**Figure 2** shows a t-shirt 1b with long sleeves in a rest state obtaining by altering the t-shirt 1a with short sleeves. The garment design process, in Figures 1 and 2 embodied as a t-shirt design process, proceeds directly in the virtual 3D environment. A designer alters a short-sleeve t-shirt 1a directly in the virtual 3D environment, for example by issuing a command 3a to lengthen the sleeves by a certain amount. Besides sleeve length alterations, any other alterations may be carried out by the designer, alterations for example relating to sleeve radius, chest circumference, waist measurement, torso length, neck opening etc. Alterations may be directly done in the virtual 3D environment, providing an altered t-shirt. The computer program generates 2D patterns 4a,4b,4c,4d corresponding to the altered t-shirt. The 2D patterns 4a,4b,4c,4d are then reassembled in 3D by the computer program, the reassembling providing a modified t-shirt. The modified t-shirt is typically not in static equilibrium. After lengthening a sleeve, for example, the additional mass of each longer sleeve exerts a force on the respective seam between the torso of the modified t-shirt and each longer sleeve. The computer program providing the virtual 3D environment comprises garment simulation routines which - upon receiving the modified t-shirt as input, for example - solve a set of mechanical equations describing garment physics with the modified t-shirt as initial input until an updated t-shirt 1b with long sleeves in rest state is determined, all physical forces acting on the updated t-shirt 1b with long sleeves being in static equilibrium. The 2D patterns 4a,4b,4c,4d allow the updated t-shirt 1b with long sleeves to be fabricated.

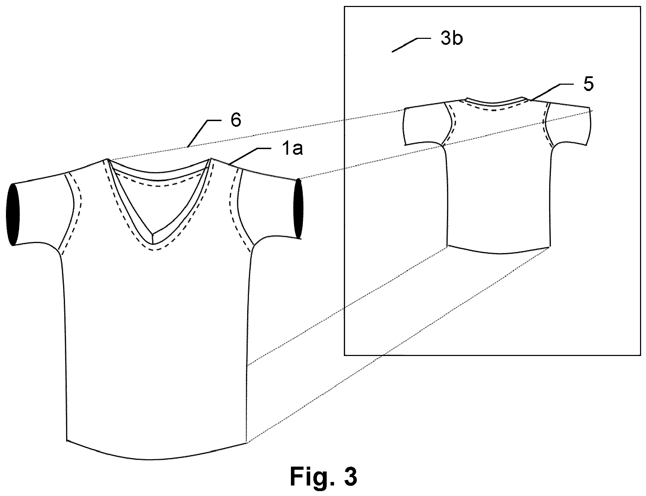

**Figure 3** shows a schematic and illustrative depiction of a t-shirt 1a with short sleeves and a projection 6 of the t-shirt 1a onto a 2D projection plane 3b chosen by a user of the computer program providing the virtual 3D environment. In Figure 3, the 2D projection plane 3b is placed behind the t-shirt 1a with short sleeves. Projecting may be embodied as a central projection or as a parallel projection, for example. The projected t-shirt 5 corresponds to a view of the t-shirt 1a with short sleeves from the back. By placing the 2D projection plane 3b at different positions and orientations with respect to the t-shirt 1a with short sleeves, a garment designer is able to obtain different projections of the t-shirt 1a with short sleeves. The garment designer is able to directly interact with the projected t-shirt 5 by e.g. changing a seam and/or removing a seam and/or adding a seam to the projected t-shirt 5. The accordingly altered projected t-shirt 5 is projected back on the t-shirt 1a with short sleeves, wherein the projecting back is done along the same rays as used for the projecting 6 in the opposite direction, providing an altered t-shirt with short sleeves.

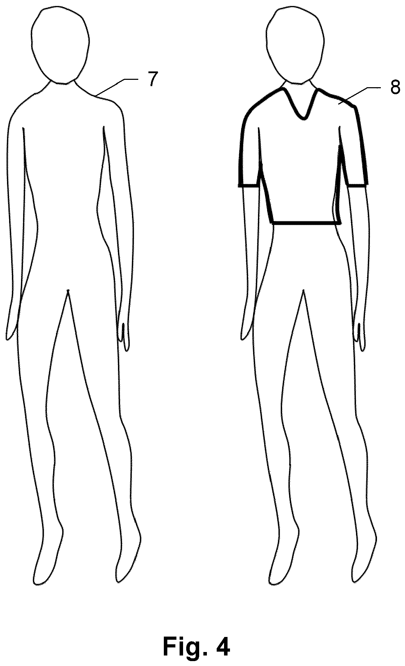

**Figure 4** shows a schematic and illustrative depiction of a human avatar 7 dressed with a t-shirt 8. The avatar 7 as shown in Figure 4 is virtual, i.e. both the avatar 7 and the avatar 7 dressed with the t-shirt 8 are provided in the virtual 3D environment. The avatar 7 and the dressing of the avatar may be incorporated into a garment design process, wherein parts of the design process are for example embodied in Figures 1 and 2. A t-shirt in rest state is placed on the avatar 7. Subsequently it is altered by the garment designer, the alteration providing an altered t-shirt. 2D patterns corresponding to the altered t-shirt are then generated and reassembled, the reassembling providing a modified t-shirt. The modified t-shirt, being placed on the avatar 7, is provided to a garment simulation routine. The garment simulation routine takes into account geometric constraints imposed by the avatar 7 on the shape of the t-shirt as well as forces, for example friction forces, between the t-shirt and the avatar 7 for determination of a t-shirt 8 at rest using at least the modified t-shirt as input.

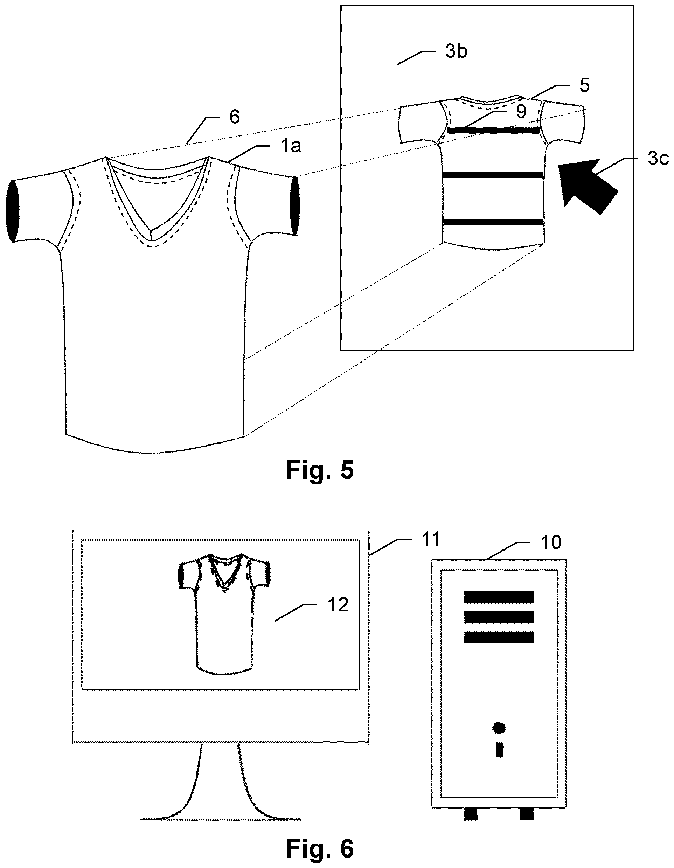

**Figure 5** shows a schematic and illustrative depiction of a t-shirt 1a with short sleeves and a projection 6 of the t-shirt 1a onto a 2D projection plane 3b chosen by a user of the computer program providing the virtual 3D environment. In Figure 3, the 2D projection plane 3b is placed behind the t-shirt 1a with short sleeves. Projecting may be embodied as a central projection or as a parallel projection, for example. The projected t-shirt 5 corresponds to a view of the t-shirt 1a with short sleeves from the back. An additive pattern 9 is added to the projected t-shirt 5 with short sleeves based on user input 3c provided via the graphical user interface. Besides added patterns, embellishments such as embroidery can be added to a garment as well based on user input. After adding prints 9 and/or embellishments onto the projected t-shirt 5, a back projecting as in Figure 3 translates these changes into changes of the t-shirt 1a itself. The added prints and/or embroidery may change the mechanical behavior of the fabric constituting the altered t-shirt.

**Figure 6** shows a schematic and illustrative depiction of a computing unit 10 and a display 11 providing the graphical user interface 12. The computer program providing the virtual 3D environment and the garment simulation routine may be stored on the computing unit. The graphical user interface 12 via which a garment designer may design a garment uses the display 11 associated to the computing unit 10.

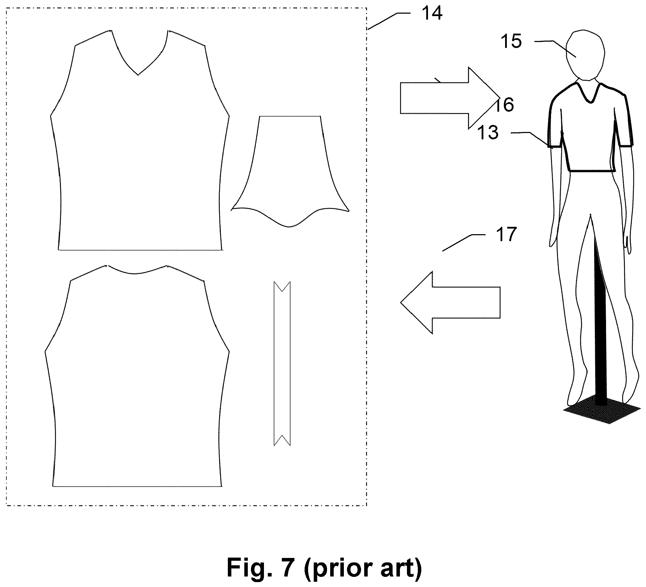

**Figure 7** shows a schematic and illustrative depiction of the prior art garment design process. A garment designer draws in 2D different perspectives of a proposed garment. A pattern maker creates 2D patterns 14 which can be sewn together to create the proposed garment. A sample maker then produces a physical garment which can be placed 16 onto a physical avatar 13, for example. If the garment designer is not satisfied with the look of the physical garment 15 on the physical avatar 13, modifications 17 to the 2D patterns 14 are made. The entire process is iterative in nature and laborious.

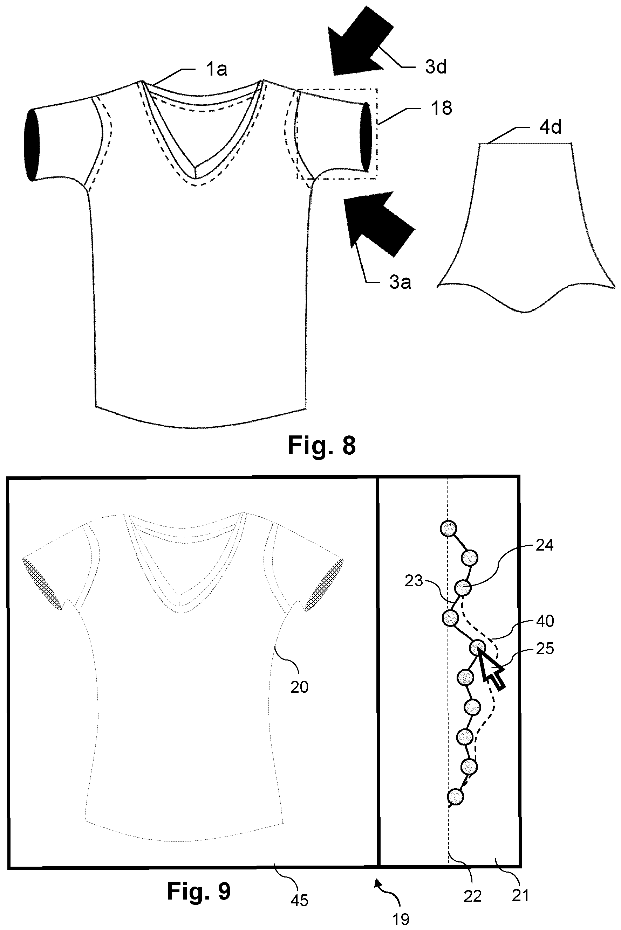

**Figure 8** shows a schematic and illustrative depiction of a selective generation of 2D patterns. The garment designer provides an instruction 3a via the graphical user interface to the computer program to lengthen the sleeves of a t-shirt 1a with short sleeves, for example. The lengthening provides an altered t-shirt. The garment designer may provide a further instruction 3d via the graphical user interface, wherein the further instruction 3d creates a selection region 18 in the virtual 3D environment. The 2D pattern generation carried out based on the altered t-shirt obtained after lengthening the sleeves only generates those 2D patterns 4d which correspond to parts of the altered t-shirt in the created selection region 18. The selection region may be created both before and after alteration of the t-shirt.

**Figure 9** shows a window 19 with a virtual 3D environment 45 and an editing field 21, which both act as graphical user interface. The virtual 3D environment 45 shows a three-dimensional depiction 20 of a relaxed garment. The 3D garment model 20 is virtually worn by a three-dimensional avatar, which in this example is visually hidden but still restricts the garment model in its position.

In the editing field 21, there is a neutral line 22 and a shapeable line 23 that can be horizontally moved by clicking and holding an anchor point 24 with a mouse cursor 25 and releasing it somewhere else. A horizontal distance between the neutral line 22 and the shapeable line 23 is representative for a fit of the garment on the avatar at the height of the respective anchor point that was shifted. Dragging an anchor point left from the neutral line 22 means that the garment not only sits tight on the skin of the avatar at this height, but does so under tension (e.g. tight fit, stretched fit). The line 23 being right from the neutral line 22 means that there is ease (e.g. casual fit) at the respective height. Accordingly, the shapeable line 23 matching the neutral line 22 would mean that the 3D garment model would exactly dimensioned as the avatar.

In other words, the neutral line 22 corresponds to the horizontal circumference of the avatar at any height of the garment. The shapeable line 23 diverging from that neutral line 22 defines in what way the current garment design is deviating from the avatar shape. The dashed line 40 indicates the original settings (or the previous settings) that the user so far departed from.

The spaces left and right from the neutral line 22 within the editing field 21 define in each case a scale for the draggable circles 24. That is, the maximum adjustment is limited by the dimensions of the editing field, wherein the scale should be set so that a reasonable or usual adjustment range is given. However, said scales could also be adjusted upfront depending on the type of garment to be designed.

In particular, the left side and the right side (relative to the line 22) of the editing field 21 can have different scales. For example, the left side (defining what stretch the garment is exposed to) could have a larger scale than the right side (defining what ease the garment has relative to the avatar). That means, for making adjustments (in the millimeter range) to a body tight fit there is relatively more space available, i.e. a fine-adjustment is provided here, and the movement for adjusting the ease (usually many centimeters) is more direct.

The line 23 can be customized by shifting the anchor points 24 in a way as desired by the designer or customer. While adjusting, the garment 20 can be modified in real-time or the garment 20 can be regenerated after each adjustment or on demand. That way, the designer has immediate feedback on his adjustments.

The adjustability provided by the GUI 19 as shown in figure 9 is very useful for designers as they can achieve a desired fit of the garment in a matter of seconds what usually takes them minutes or hours.

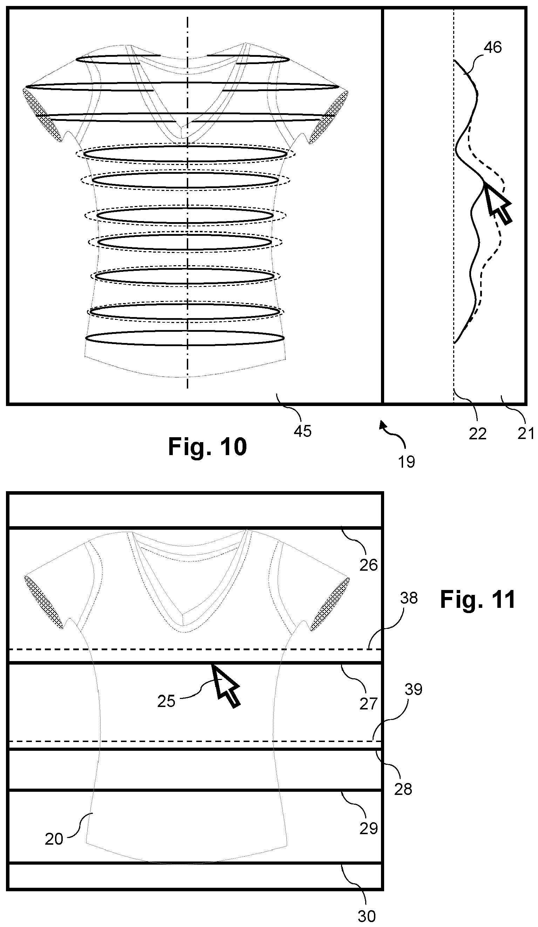

A similar exemplary GUI is shown in **Figure 10****.** Here, however, the shapeable line 46 is alone in the editing field 21, i.e. without distinctive anchor points which are optional. The shapeable line 46 can be reshaped anywhere, so that there are quasi infinite anchor points, or at least a lot more intervals compared to figure 9 where the line can be modified. So to any spot the user may click to on the line and reshape it will be determined to which height in the 3D model this spot corresponds and then the circumference will be adjusted accordingly (see the exemplary dashed circumferences and the full-lined circumferences of the 3D garment model in the window 45).

**Figure 11** shows horizontal slidable lines 26-30, which can be vertically adjusted by the cursor 25. They mark characteristic heights of the garment 20, such as the shown shoulder end 26, the bottom end 30, the chest line 27, the waist line 28, and the hip line 29. By dragging a line up or down and release it, the user can shift these characteristic heights to a desired level. The length of the overall garment will be adapted accordingly. For example, when dragging the line 27 down as shown in figure 11, the circumference that is currently set at the chest's height of the garment will be set at the newly set height. The dashed lines 38 and 39 indicate where the chest lines were before.

In real-time or after confirmation of the new settings, the garment surface above the dragged chest line 27 will be automatically reshaped to maintain a smooth transition between the circumference at the chest line 27 as a first anchor point and the circumference spaced by a defined distance above the line 27 as a second anchor point. In the same manner, the garment model surface below the line that has been dragged on will be reshaped to maintain a smooth transition overall while the restrictions as set by the lines 26-30 are respected. If one of the outer lines 26 and 30 is dragged on, the garment is shortened or lengthened.

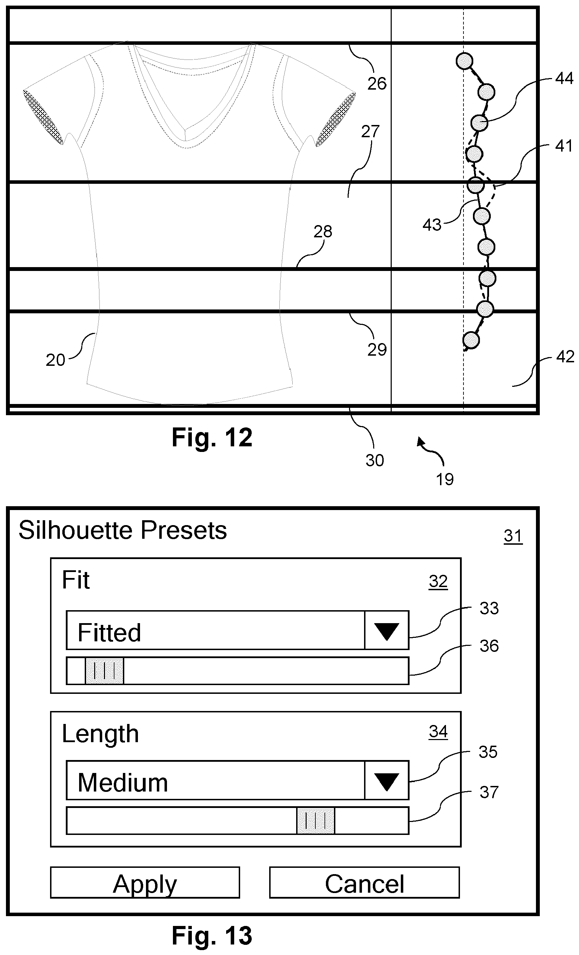

Accordingly, as can be displayed with the optional field 42 in **figure 12**, the ease profile 43 is adapted to these manipulations of the lines 27 and 28. The dashed line 41, again, may be displayed to indicate the previous settings. When the window 42 is added as shown here in figure 12, apart from the height adjustments with the lines 26-30, the anchor points 44 can additionally be used to further modify the garment model, in particular at the height of the characteristic lines 26-30. **Figure 12** also illustrate how the 3D garment model 20 is regenerated after the edits from figure 11 are applied. It can be seen that the garment is now stretched longer and the characteristic lines 27 (edited), 28 (edited), 29 (adapted), and 30 (adapted) are shifted downwards. They still mark the characteristic areas of the avatar (chest, hip, waist, etc.).

The alterations as shown on the examples of figures 9-12 are automatically translated in the background into changes on the 2D patterns that correspond to the displayed 3D garment model. The alterations are not limited to the shown amount of horizontal (slidable) lines for height adjustment but can be any amount between one and any plurality. Likewise, the amount of optional anchor points 24/44 is not necessarily as shown but can be more or less.

Settings of the anchor points 24 that form a desired curve 23 can also be stored as characteristic fits and be applied for other garment models loaded into the program or created in the program by selecting them from a list of preset fits. **Figure 13** shows an example of a presets window 31 comprising a field 32 with a drop-down list 33 with such silhouette presets. Optionally, as shown, there can also be provided a field 34 for a length profile that can be chosen from drop-down list 35. Again optionally, the GUI can provide sliders 36 and/or 37 for metering the selected presets. A fit profile selected (and optionally fine-adjusted by the slide bar) retrieves a setting of such a profile curve as shown in figure 9, numeral 23. A length profile selected (and optionally fine-adjusted by the slide bar) retrieves a setting of horizontal lines as presented in the following. A fit preset can also introduce an offset for the neutral line or a different scaling of the spaces left and right from the neutral line.

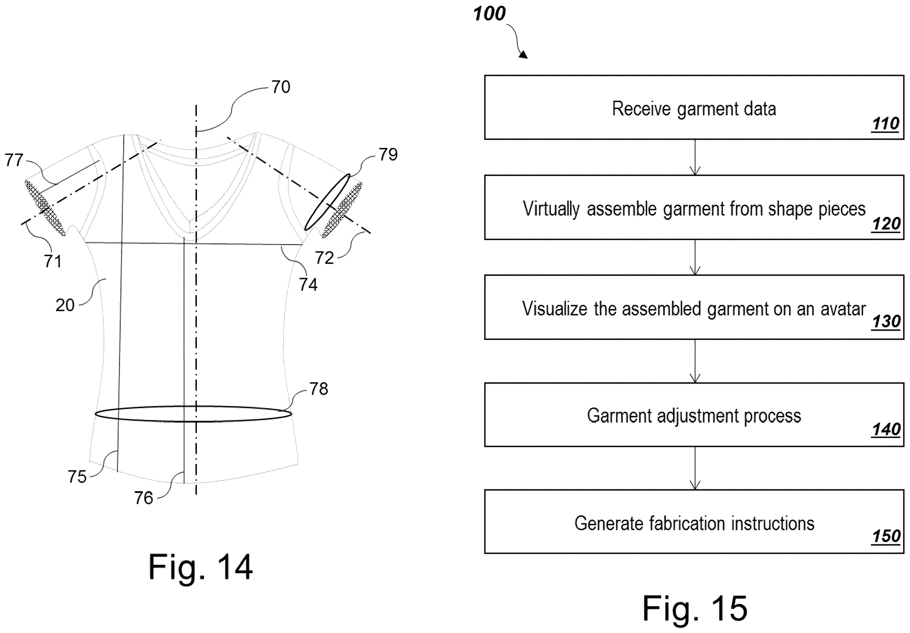

**Figure 14** shows an example of 3D measurement tools that may be provided in the GUI, in particular for facilitating a garment adjustment process. In the shown example, the garment 20 is a t-shirt that covers most of a torso and parts of the two arms of the avatar (which is not shown here). The torso defines a main torso axis 70 and each (upper) arm defines a main arm axis 71, 72.

Dimensions of the actual garment 20 that can be provided to the user by these 3D measurement tools include a width of a garment section, i.e. perpendicular (or orthogonal) to the respective main axis, and a length of a garment section, i.e. parallel to the respective main axis. In the shown example, the user requests - at a user selected parts of the garment - a width 74 of the torso section (i.e. perpendicular to the main torso axis 70), and a length 75, 76, 77 of the torso section and of one of the arms (i.e. parallel to the main torso axis 70 and the main arm axis 77, respectively). Although being provided in a 3D visualization of the assembled garment on an avatar, these dimensions may not only be provided for the assembled garment, but also for the respective 2D garment piece.

Additionally, the dimensions that the 3D measurement tools can provide also include a circumference of a garment section at a user-selectable position, wherein the circumference is perpendicular to the main axis of the respective body region. In the shown example, the user requests - at a user selected parts of the garment - a first circumference 78 about the torso, i.e. centered on the torso main axis 70, and a second circumference 79 about one of the arms, i.e. centered on the arm main axis 72.

Not only the garment pieces but also the garment openings can be measured. For instance, a circumference of the t-shirt's neck opening or the length of the V-neck parallel to the torso main axis 70 can be requested using the 3D measurement tools. Additionally, the requested dimensions may include areas or diagonal lengths that are defined by a user input.

All dimensions may be provided with a unit of length such as centimeter or inch. Optionally, a garment size (e.g., S, M, L, XL, ...) corresponding to the measured dimension may be provided (instead of or in addition to a unit of length).

**Figure 15** is a flowchart illustrating an exemplary embodiment of a method 100 according to the invention for fabricating user-generated 2D garment pieces of a garment. The method allows a designer ("user") to adapt a predefined or default garment in a graphical user interface (GUI), wherein fabrication instructions are automatically generated. Some or all steps of the method may be performed automatically in a computer system. A computer program product, i.e. a software, may run on the computer system to execute the method. Some embodiments of the method may comprise some or all processes, steps or features described above with respect to Figures 1 to 14.

The method starts with receiving 110 garment data. Said garment data relates to a predefined or default garment and at least comprises garment piece data related to a plurality of 2D garment pieces, from which said predefined or default garment is (or can be) assembled. For instance, Figure 1 shows an example of such 2D garment pieces. The plurality of 2D garment pieces comprise shape pieces, which are flat fabric pieces that together provide an overall shape of the garment when assembled. If the garment comprises finishes, the plurality of 2D garment pieces may also comprise finish pieces such as cuffs, plackets, flies, pockets, waistbands and collars. Receiving the garment data for instance may comprise loading a file into a memory of the computer system, e.g. upon receiving a respective user input. Said file can be a 2D CAD file, a DXF file or a file in a similar format.

Optionally, the received garment data may further comprise a garment type identifier that identifies - or allows identifying - a garment type of the predefined or default garment (e.g. skirt, dress, shirt, top). For instance, the garment type also defines areas of the human body that the garment is intended to cover. Alternatively or additionally, the garment type may define relative positions of garment pieces. Also, the garment type may define a plurality of openings of the garments, e.g. openings resulting from the relative positions. Each of these defined openings is necessary to accommodate a certain part (or certain parts) of the human body, such as arms, legs and neck. For example, a top has four openings: two for the arms, one for the waist and one for the neck. Optionally, a list comprising a plurality of garment type identifiers for a plurality of different garment types is provided to the user, and the garment type identifier is selected from the list by the user.

The shape pieces are virtually assembled 120 three-dimensionally (3D assembled) to form a 3D garment having a plurality of openings for accommodating body parts. The virtual 3D assembling may include an iterative proximity approach. "Iterative proximity" in this context means that different combinations of potential matches are tried until the shape pieces and the resulting openings together form a garment. If a garment type identifier with information about the garment type is received as part of the garment data, 3D assembling the shape pieces may be based also on the garment type, e.g. to accelerate the assembling or make it more robust.

The virtually 3D assembled garment is visualizing 130 on an avatar in a graphical user interface (GUI). The avatar comprises a plurality of body regions, such as a torso and one or more of arms and legs. The 3D garment at least partially covers at least a subset of these body regions. The 3D garment may also comprise finishes formed by finish parts (i.e. not shape parts). Optionally, the avatar may be fully or partially transparent, i.e. need not be visible at all during the visualization 130 of the garment. For instance, a user may be allowed to select the level of transparency. Since garments are usually made from flexible materials, the visualized 3D garment preferably is also visualized 130 as flexible, wherein the avatar defines a stable shape of the visualized garment. A size and shape of the avatar may be automatically selected based on the garment data, so that the garment always fits the avatar.

A garment adjustment process 140 is then performed that allows a user to use the GUI to generate user-generated garment pieces and/or a user-generated garment based on the visualized 3D garment. If the automated 3D assembling process did not get some detail correct, the garment adjustment process 140 also allows the user to quickly provide the missing information and make any needed corrections.

Once the garment adjustment process 140 is finished, fabrication instructions are automatically generated 150 that allow producing the user-generated garment pieces. For instance, the fabrication instructions may comprise user-generated garment piece data related to shapes and sizes of 2D garment pieces. Optionally, the fabrication instructions may also relate to a user-generated garment, e.g. comprising positioning data related to the relative positions of the plurality of 2D garment pieces of the user-generated garment, and sewing instructions for sewing together the plurality of 2D garment pieces of the user-generated garment, e.g. including sewing instructions for sewing together shape and finish pieces. For instance, the fabrication instructions may comprise cut boundaries of each of the user-generated 2D garment pieces. The fabrication instructions optionally may comprise further information regarding the garment, for instance including a fabric type, a trim type or a stitch type. The fabrication instructions may be generated to be computer-readable, human-readable or both.

In the case of computer-readable instructions, these may be provided to one or more garment fabrication machines, so that these machines may produce the user-generated garment pieces (and, optionally, the garment) based on the fabrication instructions. Providing computer-readable instructions to machines may comprise sending one or more data files via the internet to a remote factory. Alternatively, the computer system on which the method is executed may be connected directly to the machines producing the garment pieces.

In the case of human-readable instructions, these may be provided to one or more garment producers, who then produce the user-generated garment pieces based on the fabrication instructions, e.g. by programming or controlling one or more garment fabrication machines. Especially if the user who generates the garment (i.e. the designer) is also the garment producer, providing the human-readable instructions may include displaying them on the same display as the GUI. Otherwise, providing the human-readable instructions may comprise printing the instructions on paper or generating an Excel spread sheet, a PDF file or similar human-readable data.

In some embodiments, the method 100 also comprises the steps of providing the fabrication instructions and producing the garment based on the fabrication instructions.

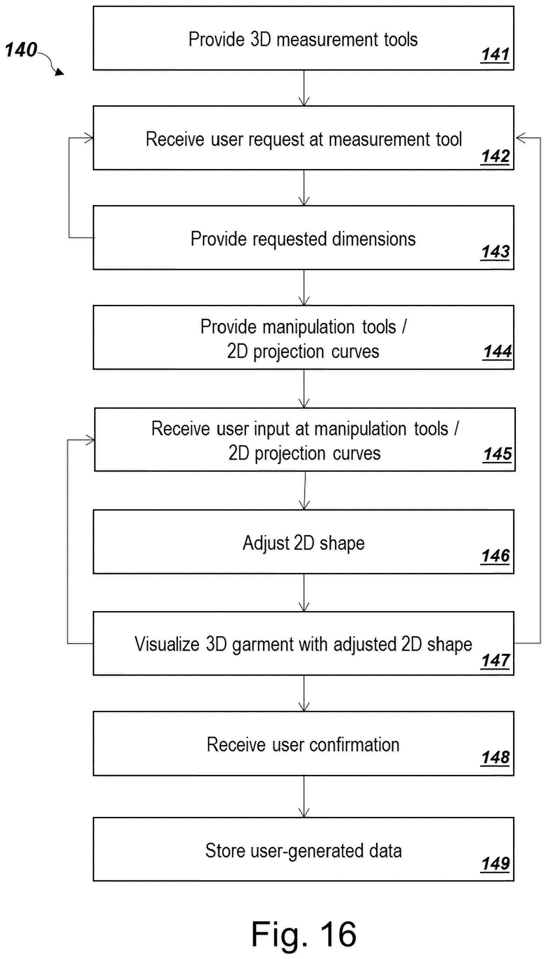

**Figure 16** is a flowchart illustrating an exemplary garment adjustment process 140, e.g. as a part of the method of Figure 15. Some or all steps of the process may be performed automatically in a computer system. A GUI is presented to the user, which may be a garment designer the GUI showing the visualization of the assembled garment on the avatar. In some embodiments, the garment adjustment process 140 comprises providing 3D CAD tools for virtually generating 2D garment pieces. In the embodiment illustrated here, these tools comprise measurement tools and manipulation tools. These allow the garment designer to determine actual dimensions of a virtual garment or its garment pieces and to easily adjust the virtual garment or its garment pieces in a highly intuitive manner.

After the start of the process 140, 3D measurement tools are provided 141 in the GUI, which allow the user to obtain dimensions of the 3D garment currently visualized on the avatar. Examples of such dimensions are illustrated in Figure 14.

In response to receiving 142 a user request at one of the 3D measurement tools, one or more of the requested dimensions of the garment are provided 143. The measurement tools may comprise virtual switches that are selectable by the user. A position of a requested measurement may be indicated freely, e.g. by clicking two points of the garment with a cursor or on a touch screen to indicate the two ends of a length or width measurement. Also, measuring relative to a main axis of the respective body part may be requested by the user by clicking a respective virtual switch in the GUI, and then selecting a position of a length, width or circumference measurement at the garment.

Additionally, manipulation tools are provided 144 in the GUI that allow the user to manipulate shapes of the 2D garment pieces. The manipulation tools comprise a plurality of 2D projection curves, each 2D projection curve being manipulatable by a user input. Such a manipulation of a curve is described with respect to Figures 9 to 12 (curve 23). The projection curve, e.g. a Bezier curve, may be easily modified via the GUI by changing the position of control points determining the shape of the Bezier curve. The curve may be provided next to or on top of the garment. A user may therefore easily modify a seam or a garment edge by adding and/or removing control points of Bezier curves, for example. The projection curves may relate, e.g., to a width, a circumference or a length of the 3D garment or of one or more of the shape pieces. Also, some of the projection curves may relate to a shape of the openings of the 3D garment.

In response to receiving 145 a user input at one of the manipulation tools, e.g. at one of the 2D projection curves, the one or more corresponding 2D shapes are adjusted 146. This may involve adjusting a width or length of the 2D shape at one or more positions. For instance, in the case of a sleeve, adjusting the 2D shape of a sleeve piece of the garment may comprise changing a length of the sleeve or changing a circumference of an arm hole of the sleeve. The user's manipulation itself may be visualized in real time as a feedback to the user. Preferably, it may be visualized as a manipulation of a flexible material, e.g. similar to a plucking or twitching at a real garment.

The manipulated 3D garment having the adjusted 2D shapes is then visualized 147 on the avatar in real time. This allows for a highly intuitive design process, in which the designer need not worry about adapting the shapes of the garment pieces and can focus on the 3D shape of the garment. The designer's 3D shape adjustment is directly translated into a 2D shape adjustment and then reassembled in 3D in a realistic manner and in real time.

The process may be iterated, e.g. by receiving user requests at the measurement tools and receiving user inputs at the projection curves, until the user is content and confirms the manipulated 3D garment that is currently visualized. Upon receiving 148 this confirmation, the shape pieces of the manipulated 3D garment are stored 149, e.g. as 2D garment pieces of a user-generated garment to be fabricated. Fabrication instructions for such 2D garment pieces can then be generated (step 150 in Figure 15).

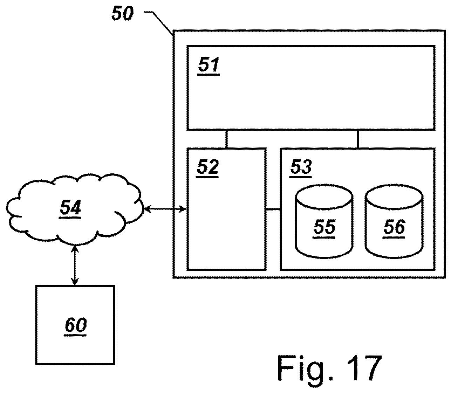

**Figure 17** shows an exemplary server computer 50 that is configured for performing embodiments of the method according to the invention, for instance the method of Figure 15. The depicted server computer 50 comprises a processor 51, a communication unit 52 and a memory 53 that are operatively coupled with each other.

The communication unit 52 is configured to establish remote data connections via the Internet 54, e.g. with a client device 60 of a user controlling a garment adjustment process. The data connections allow uploading and downloading data from and to the memory 53.

The memory 53 has stored a software (computer program product) with program code for performing the method or parts thereof when executed. The memory may also have stored a library 55, e.g. comprising macros with finishing instructions and templates that comprise information about a position and orientation of the garment pieces relative to a human body. The memory 53 may also have stored an application software program ("app") 56 that can be downloaded via the internet, installed and executed on a client device 60 of the user.

The client device 60 comprises means for establishing a remote data connection with the server computer 50 via the Internet 54, input means (e.g. a mouse, touchscreen etc.) and a display unit. The display unit allows displaying a GUI to the user, wherein the preliminary 3D garment is visualized on an avatar in the GUI and the user is allowed to control the garment adjustment process using the GUI and the input means. Optionally, the client device 60 may comprise a processor and a memory and may be configured to perform some or all of the method steps on its own. For instance, an app may be installed on the client device 60 that has been downloaded from the server 50. Also, local libraries may be provided in the memory of the client device, comprising finish macros and templates.

Although the invention is illustrated above, partly with reference to some preferred embodiments, it must be understood that numerous modifications and combinations of different features of the embodiments can be made. All these modifications lie within the scope of the appended claims.

## Claims

1. A computer-implemented method (100) for fabricating user-generated 2D garment pieces of a garment, the method comprising, automatically in a computer system:
- receiving (110) garment data related to a predefined or default garment, the garment data comprising garment piece data related to a plurality of 2D garment pieces, from which the predefined or default garment is assembled, the plurality of 2D garment pieces comprising shape pieces, wherein the shape pieces are flat fabric pieces, together providing an overall shape of the garment when assembled;
- virtually 3D assembling (120) at least the shape pieces to form a 3D garment (20) having a plurality of openings for accommodating body parts;
- visualizing (130) the 3D garment (20) on an avatar in a graphical user interface (19), the avatar comprising a plurality of body regions, the 3D garment at least partially covering at least a subset of the body regions of the avatar, wherein the body regions include at least a torso and one or more of arms and legs;
- performing a garment adjustment process (140) that allows a user to generate the user-generated 2D garment pieces based on the visualized 3D garment (20); and
- generating (150) fabrication instructions for fabricating the user-generated 2D garment pieces,
wherein the garment adjustment process (140) comprises, in the graphical user interface:
- providing (141) 3D measurement tools to the user that allow obtaining dimensions of the 3D garment (20) visualized on the avatar, wherein, in response to a user request (142) at one of the 3D measurement tools, one or more of the dimensions of the garment are provided (143);
- providing (144) a plurality of 2D projection curves, each 2D projection curve being manipulatable by a user input;
- receiving (145) a user input at one of the 2D projection curves, the user input including a manipulation of the respective 2D projection curve;
- adjusting (146), in response to the user input and according to the manipulation, a 2D shape of at least the corresponding shape piece;
- visualizing (147), in real time, a manipulated 3D garment on the avatar, the shape pieces of the manipulated 3D garment having the adjusted 2D shapes; and
- storing (149), in response to a user confirmation (148), the shape pieces of the manipulated 3D garment as the user-generated garment 2D garment pieces.

2. The method (100) according to claim 1, wherein the garment comprises one or more finishes and the plurality of 2D garment pieces comprises finish pieces that are not shape pieces, the finish pieces comprising at least a subset of cuffs, plackets, flies, pockets, waistbands and collars.

3. The method (100) according to claim 1, wherein each body region defines a main axis (70, 71, 72), and the dimensions comprise, for each of the body regions, at least one width (74) or circumference (78, 79) and at least one length (75, 76, 77), wherein:
- the at least one width (74) or circumference (78, 79) is perpendicular to the main axis (70, 71, 72) of the respective body region, and
- the at least one length (75, 76, 77) is parallel to the main axis (70, 71, 72) of the respective body region.

4. The method (100) according to claim 1, wherein the plurality of 2D projection curves relate at least to one of:
- a width of the 3D garment or of one or more of the shape pieces;
- a circumference profile of the 3D garment or of one or more of the shape pieces;
- a length of the 3D garment or of one or more of the shape pieces; and
- a shape of at least a subset of the plurality of openings of the 3D garment.

5. The method (100) according to claim 1, wherein the garment adjustment process (140) is an iterative garment adjustment process, wherein at least the steps of receiving (145) the user input, adjusting (146) the 2D shape and visualizing (147) the manipulated 3D garment are performed iteratively until the user confirmation is received (148) via the graphical user interface (19).

6. The method (100) according to claim 1, wherein the garment data comprises a garment type identifier identifying a garment type of the predefined or default garment, and virtually 3D assembling the shape pieces is based also on the garment type, particularly wherein
- a list comprising a plurality of garment type identifiers for a plurality of different garment types is provided to the user, and the garment type identifier is selected from the list by the user; and/or
- the garment type defines:
- areas of the human body the garment is intended to cover and a plurality of openings necessary to accommodate body parts, the body parts including at least one of arms, legs and neck; or
- relative positions of a set of shape pieces and a plurality of openings resulting from these relative positions.

7. The method (100) according to claim 1, wherein the garment is made from a flexible material, the visualized 3D garment (20) being visualized as flexible, wherein the avatar defines a stable shape of the visualized 3D garment, particularly wherein
- a size and/or shape of the avatar is automatically selected based on the garment data; and/or
- the method comprises, in response to a manipulation of the respective 2D projection curve, visualizing the manipulation in real time as a manipulation of the flexible material.

8. The method (100) according to claim 1, further comprising assigning one or more garment features to each of the 2D shape pieces, the garment features comprising a least a fabric, wherein the assembled shape pieces are visualized on the avatar in the graphical user interface as the preliminary 3D garment having the assigned garment features.

9. The method (100) according to claim 1, wherein the fabrication instructions comprise cut boundaries of the user-generated 2D garment pieces.

10. The method (100) according to claim 1, wherein at least one of the shape pieces is a sleeve piece relating to a sleeve of the garment, and adjusting the 2D shape of the sleeve piece comprises changing a length of the sleeve and changing a circumference of an arm hole of the sleeve.

11. The method (100) according to claim 1, wherein receiving (110) the garment data comprises loading a file into a memory of the computer system, wherein the file:
- is loaded into the memory upon receiving a respective user input; and/or
- is one of a 2D CAD file and a DXF file.

12. The method (100) according to claim 1, wherein generating (150) the fabrication instructions for fabricating the 2D garment pieces comprises generating fabrication instructions for fabricating the user-generated garment.

13. The method (100) according to claim 1, wherein the fabrication instructions are computer-readable instructions, and the method further comprises:
- providing the fabrication instructions to one or more garment fabrication machines; and
- fabricating, by the one or more garment fabrication machines, the user-generated 2D garment pieces based on the fabrication instructions.

14. The method (100) according to claim 1, wherein the fabrication instructions are human-readable instructions, and the method further comprises:
- providing the fabrication instructions to one or more garment producers; and
- fabricating, by the one or more garment producers, the user-generated 2D garment pieces based on the fabrication instructions.

15. Computer program product comprising executable code, which executable code, when executed by a computer processor, causes the computer processor to implement a method (100) of fabricating user-generated 2D garment pieces of a garment, the method comprising:
- receiving (110) garment data related to a predefined or default garment, the garment data comprising garment piece data related to a plurality of 2D garment pieces, from which the predefined or default garment is assembled, the plurality of 2D garment pieces comprising shape pieces, wherein the shape pieces are flat fabric pieces, together providing an overall shape of the garment when assembled;
- virtually 3D assembling (120) at least the shape pieces to form a 3D garment (20) having a plurality of openings for accommodating body parts;
- visualizing (130) the 3D garment on an avatar in a graphical user interface (19), the avatar comprising a plurality of body regions, the 3D garment at least partially covering at least a subset of the body regions of the avatar, wherein the body regions include at least a torso and one or more of arms and legs;
- performing a garment adjustment process (140) that allows a user to generate the user-generated 2D garment pieces based on the visualized 3D garment (20); and
- generating (150) fabrication instructions for fabricating the user-generated 2D garment pieces,
wherein the garment adjustment process (140) comprises, in the graphical user interface:
- providing (141) 3D measurement tools to the user that allow obtaining dimensions of the 3D garment visualized on the avatar, wherein, in response to a user request (142) at one of the 3D measurement tools, one or more of the dimensions of the garment are provided (143);
- providing (144) a plurality of 2D projection curves, each 2D projection curve being manipulatable by a user input;
- receiving (145) a user input at one of the 2D projection curves, the user input including a manipulation of the respective 2D projection curve;
- adjusting (146), in response to the user input and according to the manipulation, a 2D shape of at least the corresponding shape piece;
- visualizing (147), in real time, a manipulated 3D garment on the avatar, the shape pieces of the manipulated 3D garment having the adjusted 2D shapes; and
- storing (149), in response to a user confirmation (148), the shape pieces of the manipulated 3D garment as the user-generated garment 2D garment pieces.
